# EUROPEAN PATENT APPLICATION

(11) **EP 4 035 851 A1**
(43) Date of publication of application: **03.08.2022**
(21) Application number: 21154841.7
(22) Date of filing: 02.02.2021
(51) Int. Cl.: B26B 19/20, B26B 19/38

(54) **A COMB ATTACHMENT AND A KIT**

(71) Applicant: Koninklijke Philips N.V., 5656 AG Eindhoven (NL)
(72) Inventor: EIJKELKAMP, Marcus Franciscus, 5656 AE Eindhoven (NL); DE VRIES, Alwin William, 5656 AE Eindhoven (NL); Petrelli, Marcus Cornelis, 5656 AE Eindhoven (NL); HIN, Theodoor René Maria, 5656 AE Eindhoven (NL); KINGMA, Pieter, 5656 AE Eindhoven (NL)
(74) Representative: Philips Intellectual Property & Standards

(57) **Abstract**

According to an aspect, there is provided a comb attachment for a blade system, the comb attachment comprising a rack component and a pinion assembly. The rack component is defined by one of a comb and a housing and comprises a rack. The housing is configured to attach to the blade system, and the pinion assembly comprises a pinion component defined by the other of the comb and the housing. The pinion assembly further comprises an axle retained by the pinion component, and a pinion disposed on the axle such that the pinion is rotatable with respect to the pinion component. The rack and the pinion are arranged to cooperate such that rotation of the pinion on the axle induces relative linear movement between the comb and the housing. The comb attachment comprises a locking mechanism configured to rotationally lock the pinion, comprising a protrusion on one of the pinion and the pinion component, and a notch on the other of the pinion and the pinion component, the protrusion and notch being configured to engage to lock the pinion to thereby prevent relative linear movement between the comb and the housing. The pinion is moveable between a locked position, in which the protrusion and the notch are engaged, and an unlocked position, in which the protrusion and the notch are disengaged. The pinion is biased away from the rack and towards the locked position, such that pushing the pinion towards the rack and the unlocked position causes disengagement of the notch and protrusion to permit rotation of the pinion.

## Description

### FIELD OF THE INVENTION

The invention relates to a comb attachment for a blade system and a kit including the comb attachment.

### BACKGROUND OF THE INVENTION

Blade systems for cutting hair, such as razors or beard trimmers, are often supplied with several different combs which attach to the blade system, each of which provides a bridge between a user's skin and the blade system to permit cutting of hair at a predetermined length. Systems which provide a single comb which can adjust the distance between the skin and cutting element suffer from certain drawbacks, such as being bulky, or having to attach to a handle as well as a blade, such that degrees of freedom in movement of the blade are lost.

US 10,307,920 discloses a hair clipper variable comb attachment, for use with a hair clipper having a fixed upper blade and a movable lower blade, including a blade mount, a main part, a comb carrier, and a pair of adjustment pegs. The comb carrier has a front and a plurality of longitudinally extending tines that increase in height as they extend rearwardly. The blade mount secures to the fixed upper blade of the clipper. The comb carrier is slidably attached onto the main part so that as the adjustment pegs are rotated the comb carrier can move forwardly with respect to the blade to increase cutting height of the clipper and can move rearwardly to decrease cutting height. Adjustment of the comb carrier position and thus the cutting height can be made without removing the comb attachment from the hair clipper.

### SUMMARY OF THE INVENTION

According to a first specific aspect, there is provided comb attachment for a blade system, the comb attachment comprising: a rack component and a pinion assembly, the rack component defined by one of a comb and a housing and comprising a rack, the housing being configured to attach to the blade system, and the pinion assembly comprising a pinion component defined by the other of the comb and the housing, the pinion assembly further comprising an axle retained by the pinion component, and a pinion disposed on the axle such that the pinion is rotatable with respect to the pinion component, wherein the rack and the pinion are arranged to cooperate such that rotation of the pinion on the axle induces relative linear movement between the comb and the housing; a locking mechanism configured to rotationally lock the pinion, wherein the locking mechanism comprises a protrusion on one of the pinion and the pinion component, and a notch on the other of the pinion and the pinion component, the protrusion and notch being configured to engage to lock the pinion to thereby prevent relative linear movement between the comb and the housing, wherein the pinion is moveable between a locked position, in which the protrusion and the notch are engaged, and an unlocked position, in which the protrusion and the notch are disengaged, and wherein the pinion is biased away from the rack and towards the locked position, such that pushing the pinion towards the rack and the unlocked position causes disengagement of the notch and protrusion to permit rotation of the pinion.

The pinion component may be the comb and the rack component may be the housing.

The pinion assembly may comprise at least two pinions each arranged to cooperate with the rack.

The housing may be configured to removably attach to the blade system.

The pinion may comprise a plurality of protrusions or notches distributed around the pinion. The plurality protrusions or notches may be configured to engage with the other of the protrusion or notch on the pinion component to permit locking the pinion at different rotational positions around the axle.

The comb may comprise a plurality of teeth extending in a direction parallel to the direction of movement between the comb and the housing, each tooth having an increasing depth along its extent, from a point, to define a triangular shape, the teeth being configured to rest on the blade system. The teeth may comprise a blade side which is configured to rest on the blade system and a hair side which is configured to rest on a user's skin in use. The teeth may provide an increasing distance between the blade side and the hair side to define a triangular shape so that, when attached to a blade system, linear movement of the comb with respect to the housing varies a distance between the blade system and the hair side of the teeth, thereby varying the cutting length of hair.

The teeth of the comb may be configured to rest on the blade system on a blade side of the teeth. The blade side of each tooth may comprise a plurality of successively deepening recesses distributed along the extent of the tooth from the point, each recess being configured to receive an edge of the blade system.

The housing may comprise two opposing sides between which the comb is disposed. The comb may comprise a guide cylinder extending from a side of the comb and held in a guide channel of the side of the housing to guide linear movement of the comb relative to the housing.

The comb may comprise two guide cylinders, each extending from opposing sides of the comb and held in a respective guide channel in opposing sides of the housing.

The guide channel in the side of the housing may comprise an undulating profile comprising a plurality of hills and valleys. The guide cylinder may be configured to snap into respective valleys during linear movement between the comb and the housing.

The comb may comprise a plurality of triangular notches distributed in a row along a length of the comb perpendicular to an axis of the axle. The housing may comprise a corresponding triangular protrusion configured to engage each triangular notch during linear movement between the comb and the housing.

The comb attachment may comprise a torsion spring having a central coil with two ends extending from the coil. The central coil may be held on the pinion component, one end of the torsion spring may acts on the axle to bias the pinion to the locked position, and the other end of the torsion spring may act on the rack component to bias the comb towards the housing.

According to a second aspect, there is provided a kit comprising a blade system and a comb attachment according to the first aspect.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Fig. 1 schematically shows an oblique view of a blade system with a comb attachment;
Fig. 2 schematically shows an exploded view of the comb attachment;
Fig. 3 schematically shows a first cross sectional side view of the comb attachment;
Fig. 4 schematically shows a second cross sectional side view of the comb attachment; and
Fig. 5 schematically shows a third cross sectional side view of the comb attachment.

### DETAILED DESCRIPTION OF THE EMBODIMENTS

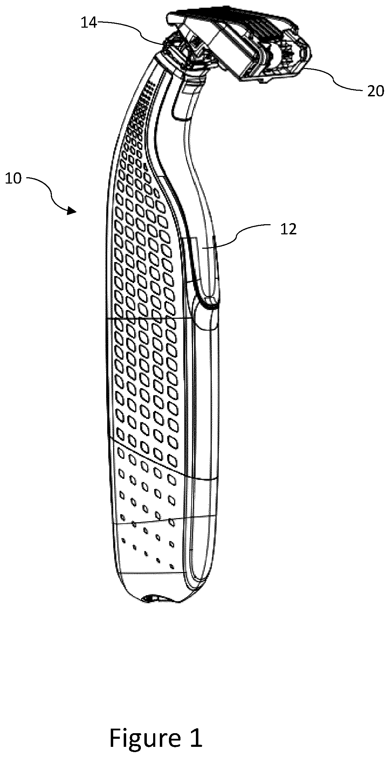

Fig. 1 shows an example blade system 10 and a comb attachment 20. The blade system 10 comprises a handle 12 and a head 14. In this example, the blade system 10 is an electric razor such as a beard trimmer, comprising a first stationary blade and a second reciprocating blade. In other examples, the blade system may be a manual razor.

The comb attachment 20 is removably attached to the head 14 of the blade system 10 in this example. Attaching the comb attachment 20 to only the head 14 of the blade system 10 ensures that any degrees of freedom of movement of the head 14 with respect to the handle 12 are retained such that the comb attachment 20 can also move with the same degrees of freedom as the head 14 relative to the handle 12. The comb attachment 20 is attached to the blade system 10 with a snap fit arrangement and can therefore be easily removed from the blade system 10 and replaced on the blade system 10. In some examples, the comb attachment 20 may not be removable. In other examples, the comb attachment may be connected to any part of the blade system, such as only the handle or both the head and the handle.

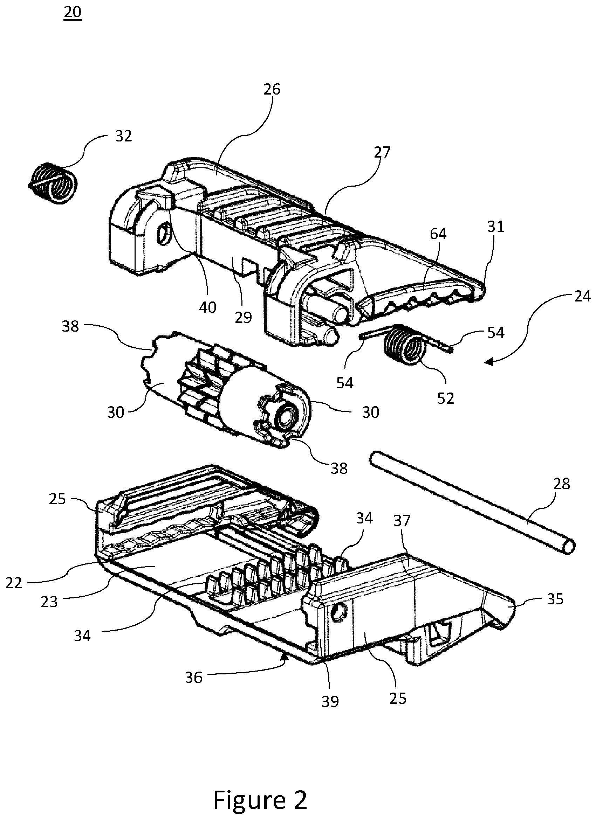

Fig. 2 shows an exploded view of the comb attachment 20. The comb attachment 20 comprises a rack component 22 and a pinion assembly 24. The pinion assembly 24 comprises a pinion component 26, an axle 28, a pair of pinions 30, and a pair of torsion springs 32.

In this example, the rack component 22 is a housing 22 and the pinion assembly 24 is a comb assembly 24, where the pinion component is a comb 26. The housing 22 comprises a base 23 and two opposing sides 25 extending from the base 23. The comb 26 is received between the opposing sides 25 when the comb attachment 20 is assembled.

The housing 22 also comprises a pair of racks 34, each rack 34 defined by a plurality of teeth protruding from the base 23 of the housing 22 in a row, and the rows being parallel.

The pair of pinions 30 of the pinion assembly 24 are configured to be rotatably disposed on the axle 28 and the comb 26 is configured to retain the axle 28. The pair of pinions 30 are each defined by a cylinder comprising a plurality of teeth distributed around a part of the curved surface of the cylinder. In some examples, the pinions may be integral with the axle, and the axle may be rotatably retained in the comb (i.e. the pinion component).

When assembled, as described in more detail below, the teeth of the pinions 30 and the teeth of the racks 34 are configured to cooperate to translate a rotational movement in the pinions 30 to linear movement of the rack 34, thereby induces relative linear movement between the housing 22 and the comb 26.

It will be appreciated that in some examples, there may be only a single pinion and cooperating rack, or in other examples, there may be more than two pinions and cooperating racks. In yet other examples, there may be only a single rack, or fewer racks than there are pinions, where the teeth on the rack are wide enough to cooperate with more than one pinion. Having two or more pinions arranged to cooperate with one or more racks results in a more precise and stable relative linear movement between the comb 26 and the housing 22 when the pinions 30 are rotated. The further apart the pinions 30 are along the axle 28, the more precise and stable the linear movement of the comb 26 relative to the housing 22.

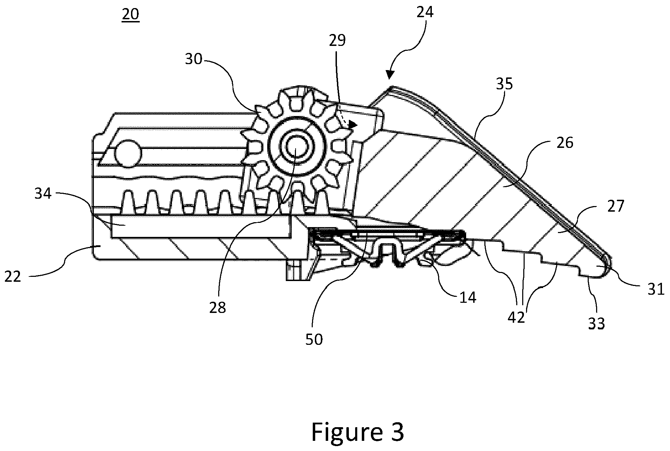

Referring to Fig. 3 which shows a cross-sectional side view of the comb attachment 20, when the comb assembly 24 is disposed between the sides 25 of the housing 22, the racks 34 and the pinions 30 are arranged so that the teeth of the racks 34 cooperate with the teeth of the respective pinions 30 such that rotation of the pinions 30 on the axle 28 induces relative linear movement between the comb 26 and the housing 22, along a direction parallel to the rows of teeth of the rack 34.

The housing 22 is configured to be attached to the blade system 10. In this example, the housing 22 is configured to be attached solely to the head 14 at a position on an opposing surface to the rack 34. Therefore, when the comb attachment 20 is attached to the blade system 10, rotation of the pinions 30 on the axle 28 induces relative movement between the comb 26 and the head 14 (or any part of the blade system 10 to which the comb attachment 20 is attached).

The head 14 comprises a blade 50, and the housing 22 is configured to be attached to the head 14 so that the rack 34 runs parallel to a planar face of the blade 50. Therefore, the comb 26 is moveable relative to the blade 50 in a direction parallel to the planar surface of the blade 50. Having the comb 26 moveable in a direction parallel to the planar surface of the blade 50 when the comb attachment 20 is attached to the blade system 10 enables a larger degree of movement between the head 14 and the handle 12 of the blade system 10. In some examples, where the direction of movement of the comb is not parallel to the planar surface of the blade, this may restrict movement of the head with respect to the handle due to the comb attachment impacting the handle.

The comb 26 comprises a plurality of teeth 27 (shown best in Fig. 2) extending from a back 29 to a point 31. Each tooth has an increasing depth along its extent, from the point 31 to the back 29, defining a triangular shape. The triangular teeth 27 comprise a blade surface 33 and a hair surface 35. The blade surface 33 is configured to be closest to the blade system 10 and rests at least partially on the head 14 of the blade system 10. The hair surface 35 is angled with respect to the blade surface 33 and is configured to be run over skin with hair to be shaved or trimmed.

The sides 25 of the housing comprise a similar shape to the teeth of the comb 26 (best shown in Fig. 2), extending with increasing depth from a point 31 to a centre 37, defining a triangular shape and further extending beyond the centre 37 to a back 39 with a uniform depth. It will be appreciated that the housing may have any suitable shape that does not interfere with the function of the comb or which enhances the function of the comb.

Movement of the comb 26 relative to the housing 22 and the head 14 varies the distance (perpendicular to the hair surface 35) between the hair surface 35 and the head 14 (where the blade 50 is located for cutting the hair) such that the length of hair cutting can be adjusted by movement of the comb 26 relative to the head 14.

The blade surface 33 of each tooth 27 comprises a plurality of stepped recesses 42 distributed along the extent of the tooth 27 (i.e. successive recesses 42 from the point 31 to the back 29). Each recess 42 is configured to receive an edge of the head 14 to be supported by the head 14.

Due to the profile of the triangular teeth 27 of the comb 26, when the hair surface 35 of the comb 26 is run over the skin of a user with hair, the end of the hair is typically pulled over the point 31 of the comb 26 and over the blade surface 33 of the comb 26. Having the recesses 42 in the blade surface 33 in which the head 14 of the blade system 10 is received ensures that the cutting blade to cut the hair is recessed slightly below the blade surface 33 adjacent to the head 14. This improves the accuracy of the length of cut hair, since the hair is pulled relatively taut at this point. Without this recess 42, the blade of the head 14 would be located past the blade surface 33 at which point the hair is not pulled by the comb 26, such that the cut hair may not be uniformly the same length.

Referring back to Fig. 2, the comb attachment 20 further comprises a locking mechanism between each of the pinions 30 and the comb (i.e. the pinion component) 26. The locking mechanism is configured to rotationally lock the pinion 30 (i.e. to lock the pinion 30 on the axle 28 such that it cannot rotate relative to the axle 28).

The locking mechanism for each pinion 30 comprises at least one notch 38, in this example, a plurality of notches 38 distributed around the curved surface of the pinion 30, and a protrusion 40 on the comb (i.e. the pinion component) 26 which is configured to engage with each of the notches 38 respectively to lock the pinion 30 with respect to the comb 26. The pinion 30 can therefore be locked in a plurality of different rotational positions around the axle 28.

Locking the pinion 30 prevents rotation of the pinion 30 on the axle 28, and therefore prevents relative movement between the comb 26 and the housing 22.

It will be appreciated that in other examples, the locking mechanism for the pinion may comprise at least one protrusion on the pinion and a notch on the comb which is configured to engage with the protrusion.

The pinions 30 are moveable between a locked position and an unlocked position. In the locked position, each protrusion on the comb 26 is engaged with one of the notches on the respective pinion 30 to rotationally lock the pinion 30. In the unlocked position, the protrusions 40 and notches 38 are disengaged.

In this example, the pinion 30 is biased away from the rack 34 towards the locked position, such that the pinion 30 is held locked, and only unlocked with an external force. The pinion 30 may therefore be pushed against the biasing force towards the rack 34 to unlock the pinion 30 and thereby permit rotation of the pinion 30 about the axle 28. The pinions 30 are exposed in the comb attachment 20 to allow a user to engage the pinion 30 to push it to the unlocked position, and to rotate the pinion 30.

In this example, the pinions 30 are biased to the locked position by the torsion springs 32. The torsion springs 32 comprise a central coil 52 with two spring ends 54 extending from the central coil 52.

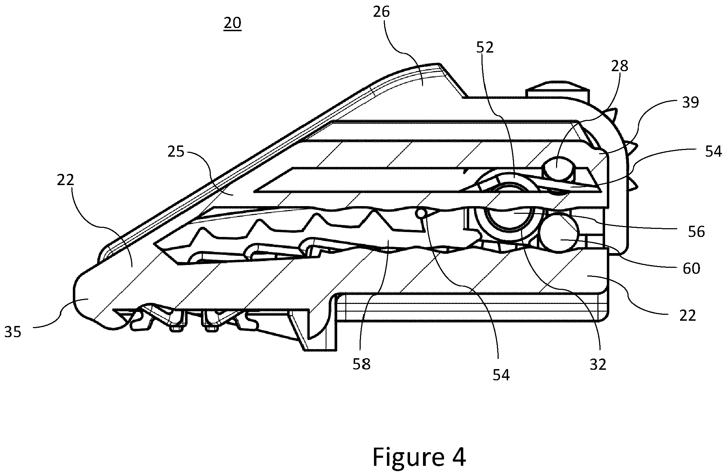

Fig. 4 shows a second side cross-sectional view of the comb attachment 20 in which the central coil 52 of the torsion spring 32 is held on a cylinder 56 on the comb 26 (i.e. the pinion component 26), the cylinder 56 extending with its axis parallel to the axis of the axle 28. One spring end 54 acts on the axle 28 to bias the pinions 30 to the locked position (upwards in Fig. 4), and the other spring end 54 acts on the housing 22 to bias the comb 26 towards the housing 22 (shown as biasing the housing 22 upwards in Fig. 4, which pushes the comb 26 and the housing 22 towards one another).

The comb 26 and the housing 22 are pushed together in order to ensure correct positioning of the comb relative to the housing 22, and to ensure that the distance between the hair surface 35 of the comb and the head 14 is accurate. Without this biasing force to push the comb 26 and the housing 22 together, they may separate such that the distance between the hair surface 35 of the comb 26 and the head 14 may not be predictable and precise.

In other examples, the biasing force for the locking mechanism may be provided by a springs, for example one on either side of the comb, and the comb assembly may comprise further springs to push the comb and housing together. These springs may be in the form of leaf springs for example. The torsion spring provides both functions with only a single spring but having a different spring for each function may make it easier to tune each function to a desired force to overcome the bias.

In this example, the housing 22 comprises a guide channel 58 extending in each side 25 of the housing 22 (only one side 25 is shown in Fig. 4) along the length of the side 25 from the point 31 to the back 39. The comb 26 comprises a pair of guide cylinders 60 which each extend from opposing sides of the comb 26 and are each held in a respective guide channel 58 of the housing 22 to guide linear movement of the comb 26 relative to the housing 22. In other examples, there may be only a single guide channel in the housing and a single guide cylinder on the comb which are configured to cooperate to guide linear movement of the comb relative to the housing.

In this example, the guide channel 58 comprises an undulating profile comprising a plurality of hills and valleys. The guide cylinder 60 is configured to snap into respective valleys during linear movement between the comb 26 and the housing 22 to give tactile feedback to a user when rotating the pinion 30 to move the comb 26.

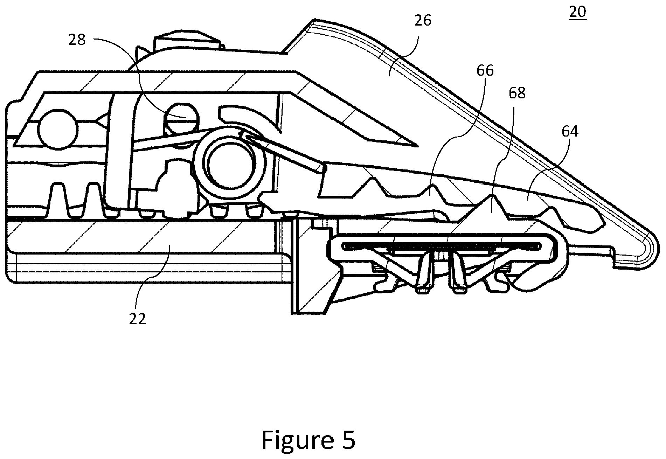

Fig. 5 shows a third side cross-sectional view of the comb attachment 20. The comb 26 comprises a pair of ridges 64, each protruding from opposing sides of the comb 26 (also shown in Fig. 2) and extending along the length of the comb 26 in a direction perpendicular to the axis of the axle 28. Only one ridge 64 is shown in Figs. 2 and 5. Each ridge 64 comprises a plurality of triangular notches 66 distributed in a row along the ridge 64 (in the direction perpendicular to the axis of the axle 28). The housing 22 comprises a corresponding triangular protrusion 68 on opposing sides, each of which is configured to engage with each triangular notch 66 on the respective ridge 64 during linear movement between the comb 26 and the housing 22. Due to the tapered profile of a triangular point of the triangular protrusion 68 and the triangular notches 66, the triangular protrusion 68 fits accurately into each corresponding notch 66, and induces the comb 26 to move relative to the housing 22 if the position between the comb 26 and the housing 22 does not allow the triangular protrusion 68 to fit neatly into the triangular notch 66. This therefore ensures accurate positioning of the comb 26 relative to the housing 22 for engagement of each notch 66 with the protrusion 68.

Since the axle 28 may have some freedom of movement, and there may be some freedom of movement between the teeth of the pinion 30 and the rack 34 when engaged, having the triangular notches 66 and triangular protrusion 68 may ensure a more accurate hair cut length setting when moving the comb 26 relative to the housing 22.

In other examples, the comb may comprise a plurality of triangular protrusions, and the housing may comprise a notch, or the housing may comprise a plurality of triangular protrusions or notches, and the comb may comprise a corresponding triangular notch or protrusion.

Although it has been described in the examples above that the rack component comprising a rack is a housing and that the pinion component which receives the axle having the pinions is the comb, it will be appreciated that the comb may comprise the rack and that the housing may receive the axle with the pinions. Such an arrangement would still permit relative linear movement between the comb and the housing, the main difference being that the pinions do not move with the comb relative to the housing in this example, but rather remain stationary relative to the housing when the comb is moved relative to the housing.

It is preferable for the rack component to be the housing and the pinion component to be the comb as this requires more movement of the finger of a user to induce linear movement between the comb and the housing. For example, the user may hold the handle of a blade component and rotate the pinion on the comb with a finger. Since the pinion moves with the comb relative to the housing when rotated, the finger must move further for the same amount of linear movement between the comb and the housing than if the pinion remained stationary with respect to the housing. Therefore, the user will have more precision in relative movement between the comb and the housing.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A comb attachment (20) for a blade system (10), the comb attachment (20) comprising:
a rack (34) component and a pinion assembly (24), the rack (34) component defined by one of a comb (26) and a housing (22) and comprising a rack (34), the housing (22) being configured to attach to the blade system (10), and the pinion assembly (24) comprising a pinion component defined by the other of the comb (26) and the housing (22), the pinion assembly (24) further comprising an axle (28) retained by the pinion component, and a pinion (30) disposed on the axle (28) such that the pinion (30) is rotatable with respect to the pinion component, wherein the rack (34) and the pinion (30) are arranged to cooperate such that rotation of the pinion (30) on the axle (28) induces relative linear movement between the comb (26) and the housing (22);
a locking mechanism configured to rotationally lock the pinion (30), wherein the locking mechanism comprises a protrusion (40) on one of the pinion (30) and the pinion (30) component, and a notch (38) on the other of the pinion (30) and the pinion (30) component, the protrusion (40) and notch (38) being configured to engage to lock the pinion (30) to thereby prevent relative linear movement between the comb (26) and the housing (22),
wherein the pinion (30) is moveable between a locked position, in which the protrusion (40) and the notch (38) are engaged, and an unlocked position, in which the protrusion (40) and the notch (38) are disengaged, and wherein the pinion (30) is biased away from the rack (34) and towards the locked position, such that pushing the pinion (30) towards the rack (34) and the unlocked position causes disengagement of the notch (38) and protrusion (40) to permit rotation of the pinion (30).

2. A comb attachment (20) according to claim 1, wherein the pinion (30) component is the comb (26) and wherein the rack (34) component is the housing (22).

3. A comb attachment (20) according to claim 1 or 2, wherein the pinion assembly (24) comprises at least two pinions (30) each arranged to cooperate with the rack (34).

4. A comb attachment (20) according to any preceding claim, wherein the housing (22) is configured to removably attach to the blade system (10).

5. A comb attachment (20) according to any preceding claim, wherein the pinion (30) comprises a plurality of protrusions (40) or notches (38) distributed around the pinion (30), wherein the plurality of protrusions (40) or notches (38) are configured to engage with the other of the protrusion (40) or notch (38) on the pinion (30) component to permit locking the pinion (30) at different rotational positions around the axle (28).

6. A comb attachment (20) according to any preceding claim, wherein the comb (26) comprises a plurality of teeth (27) extending in a direction parallel to the direction of movement between the comb (26) and the housing (22), each tooth (27) having an increasing depth along its extent, from a point (31), to define a triangular shape, the teeth (27) being configured to rest on the blade system (10).

7. A comb attachment (20) according to claim 6, wherein the teeth (27) of the comb (26) are configured to rest on the blade system (10) on a blade side (25) of the teeth (27), and
wherein the blade side (25) of each tooth (27) comprises a plurality of successively deepening recesses (42) distributed along the extent of the tooth (27) from the point (31), each recess (42) being configured to receive an edge of the blade system (10).

8. A comb attachment (20) according to any preceding claim, wherein the housing (22) comprises two opposing sides (25) between which the comb (26) is disposed, and wherein the comb (26) comprises a guide cylinder (60) extending from a side (25) of the comb (26) and held in a guide channel (58) of the side (25) of the housing (22) to guide linear movement of the comb (26) relative to the housing (22).

9. A comb attachment (20) according to claim 8, wherein the comb (26) comprises two guide cylinders (60), each extending from opposing sides (25) of the comb (26) and held in a respective guide channel (58) in opposing sides (25) of the housing (22).

10. A comb attachment (20) according to claim 8 or 9, wherein the guide channel (58) in the side (25) of the housing (22) comprises an undulating profile comprising a plurality of hills and valleys, wherein the guide cylinder (60) is configured to snap into respective valleys during linear movement between the comb (26) and the housing (22).

11. A comb attachment (20) according to any preceding claim, wherein the comb (26) comprises a plurality of triangular notches (66) distributed in a row along a length of the comb (26) perpendicular to an axis of the axle (28), and the housing (22) comprises a corresponding triangular protrusion (68) configured to engage each triangular notch (66) during linear movement between the comb (26) and the housing (22).

12. A comb attachment (20) according to any preceding claim, comprising a torsion spring (32) having a central coil (52) with two ends extending from the coil, wherein the central coil (52) is held on the pinion (30) component, and wherein one end of the torsion spring (32) acts on the axle (28) to bias the pinion (30) to the locked position, and wherein the other end of the torsion spring (32) acts on the rack (34) component to bias the comb (26) towards the housing (22).

13. A kit comprising a blade system (10) and a comb attachment (20) according to any preceding claim.
